# EUROPEAN PATENT APPLICATION

(11) **EP 3 616 844 A1**
(43) Date of publication of application: **04.03.2020**
(21) Application number: 19188106.9
(22) Date of filing: 24.07.2019
(51) Int. Cl.: B25B 27/02, F01D 5/30, F04D 29/64

(54) **FAN BLADE REMOVAL METHOD AND TOOLING**

(30) Priority: 20.08.2018 GB 201813498
(71) Applicant: Rolls-Royce plc, London N1 9FX (GB)
(72) Inventor: Cooper, Joseph, Derby, Derbyshire DE24 8BJ (GB)
(74) Representative: Rolls-Royce plc

(57) **Abstract**

A tooling and a method for removing or mounting a fan blade from or to a fan disc of a ducted fan aeroengine are provided. The tooling comprises a cover adapted to be arranged on an inner wall of an air intake of the aeroengine and a boot adapted to be mounted on a leading edge tip of the blade and adapted to slide on the cover during removing or mounting the fan blade from or to the fan disc.

## Description

The present disclosure relates to a method and tooling for assembly/disassembly of fan blades to/from a fan disc of a ducted fan aeroengine, in particular, but not exclusively, a gas turbine engine.

A ducted fan aeroengine generally comprises a fan mounted within a fan casing and an intake to guide air towards the fan. The fan comprises a plurality of fan blades extending radially and a fan disc rotating about a principal rotational axis, or axial direction, each fan blade being mounted on a respective fan disc seat.

Fan blades may be mounted on respective fan disc seats during initial engine build or may be mounted/dismounted to/from the respective fan disc seats during in-service activity (e.g. inspection, maintenance, replacement due to damage, etc.).

There are known methods of removing fan blades from a respective fan disc seat in ducted fan aeroengines.

Existing methods involve for example the removal of hardware in order to create an extraction envelope or clearance for the blade to be translated through to release it from the fan disc. This could include the removal of the entire intake and possibly forward sections of the fan casing, for example fan case liner sections, in order to remove one or more blades. This can be problematic as liner sections are sometimes mechanically attached and others are bonded to the fan case. Both of these options are time consuming to remove and replace.

Another known option is to use a computer guided arm to manipulate the blade out of the disc, carefully controlling the clearances between the fan blade root to fan disc and between the fan blade tip and fan case liner. This is a very expensive method which could only be available at a build facility.

Accordingly it is desirable to provide a safe, practical and inexpensive method of removing or mounting a fan blade from or to a fan disc of a ducted fan aeroengine.

According to a first aspect there is provided a method of removing/mounting a fan blade from/to a fan disc of a ducted fan aeroengine comprising providing a cover on the inner wall of the air intake, and/or a boot on a leading edge tip and/or trailing edge tip of the fan blade; and removing/mounting the fan blade from/to the fan disc by sliding the fan blade across the inner wall of the air intake of the aeroengine, wherein said cover and/or boot prevent the fan blade from contacting the inner wall of the air intake during removing/mounting.

In the present disclosure, a radial direction is a direction from root to tip of the fan blade and an axial direction is a direction about which the fan rotates.

In the present disclosure, reference to upstream and downstream is with respect to the direction of the axial flow of air through the ducted fan aeroengine.

The method may use the profile of the air intake itself to guide the fan blade out of the disc aperture, enabling controlled and predictable rotation and preventing over rotation of the fan blade root in the disc. It is particularly light weight and transportable as a solution, whilst not affecting the performance of the air intake through steps and gaps created by a removable section of the air intake or changing the profile to allow a 'flat' section to translate the blade across. It also saves time as no panels need to be removed and re-installed in the air intake and fan case.

The method may comprise providing the cover on the inner wall of the air intake of the aeroengine, providing the boot on the leading edge tip and/or the trailing edge tip of the fan blade, and removing/mounting the fan blade from/to the fan disc by sliding the boot across the cover. During removing/mounting, the boot may be in contact, at least temporarily, with the cover. During removing/mounting, the cover and the boot prevent the fan blade from contacting the inner wall of the air intake.

The method may comprise providing the cover on the inner wall of the air intake of the aeroengine, no boot on the leading or trailing edge tip of the fan blade, and removing/mounting the fan blade from/to the fan disc by sliding the fan blade across the cover. During removing/mounting, the fan blade may be in contact, at least temporarily, with the cover. During removing/mounting, the cover prevents the fan blade from contacting the inner wall of the air intake.

The method may comprise providing the boot on the leading edge tip and/or on the trailing edge tip of the fan blade, no cover on the inner wall of the air intake of the aeroengine, and removing/mounting the fan blade from/to the fan disc by sliding the boot across the inner wall of the air intake. During removing/mounting, the boot may be in contact, at least temporarily, with the inner wall of the air intake. During removing/mounting, the boot prevents the fan blade from contacting the inner wall of the air intake.

The cover may be a protective cover. The boot may be a protective boot.

The cover may be installed to protect, at least in part, an intake liner of the air intake, whilst supporting the weight of the fan blade and guiding it radially.

The cover may be installed to protect, at least in part, a fan track liner of the air intake.

The cover may be in contact with the boot of the leading edge tip of the fan blade, and/or with the fan blade itself, i.e. with parts of the fan blades not covered by the boot, to guide the fan blade radially.

The cover may be installed to protect a bottom dead centre region of the air intake.

The cover may comprise an inner surface facing the inner wall of the air intake. The cover may be in contact with the inner wall of the air intake. The inner surface may precisely follow a profile, or aerolines, of the inner wall of the air intake. The cover may be in contact with the intake liner. The cover may partially cover the intake liner. The cover may partially cover the fan track liner. The cover may partially cover the intake liner and the fan track liner.

The cover may extend axially at least 50 %, for example at least 60 %, or at least 70 %, or at least 80 %, or at least 90 % of an axial length of the intake, the axial length of the intake being defined as an axial distance between a highlight of the intake and the leading edge tip of the fan blade.

The cover may extend axially at least 50 %, for example at least 60 %, or at least 70 %, or at least 80 %, or at least 85 % of a longitudinal length of the fan blade root.

The cover may extend from a position just upstream of the leading edge tip to a forward end of the air intake.

The cover may have a width corresponding to at least a width of the tip of the fan blade, for example at least two, or three, or four, or five, or six or seven, or eight times the width of the tip of the fan blade.

The cover may comprise an outer surface. The outer surface may provide a radial profile guidance to the fan blade. It will be understood that the outer surface of the cover is a surface opposite to the inner surface of the cover. The outer surface may closely follow the aerolines. Alternatively, the outer surface may not be parallel to the aerolines. The outer surface may be designed to provide a suitable profile for blade removal/mounting. The cover may have a thickness of less than 30 mm, for example less than 20 mm, or less than 15 mm.

The method may comprise providing the cover on the inner wall of the air intake and providing the cover with a groove, or track, to axially guide the fan blade during removing/mounting .

The method may comprise providing the cover on the inner wall of the air intake, providing the cover with a groove, or track, providing the boot on the leading edge tip and/or the trailing edge tip of the fan blade, and coupling the boot with the groove during removing/mounting.

The method may comprise providing the boot on the leading edge tip and/or the trailing edge tip of the fan blade and providing the boot with a boss, or pin, and coupling the boss with the groove during removing/mounting.

In a production environment, an assistance arm may be included, supporting the blade during removal/mounting and enabling axial movement. The assistance arm may be provided with suction cups to support the blade during removal/mounting. This would allow the method to be carried out by a single person when blade mass exceeds 20kg (manual handling limit for one person).

The method may comprise providing the cover on the inner wall of the air intake of the aeroengine and the cover may be removably mounted to the inner wall of the air intake of the aeroengine.

The cover may be removably mounted to the inner wall of the air intake of the aeroengine by fixing the cover to the air intake with any one of bolts, clamps, magnets, suction cups or frames, or any combination thereof.

To fix the cover to the air intake with bolts, bolt holes may be provided in the cover. The bolt holes may be positioned away from a slide path of the fan blade. For example, two or more bolts, for example four bolts, may be provided to secure the cover in position. The bolts may be secured to corresponding holes achieved in the inner wall of the air intake.

To fix the cover to the air intake with magnets, one or more magnets may be provided on the cover and/or on the inner wall of the air intake. For example, magnets may be embedded in the cover, or fixed to the cover and/or the inner wall of the air intake.

To fix the cover to the air intake with suction cups, suction cups may be provided on the inner surface of the cover and/or on the inner wall of the air intake itself.

To fix the cover with a frame, a frame (for example an A-frame) may be locked to the fan disc and may hold the cover in place at a defined rotational angle of the fan.

At least the outer surface of the cover may be made of polytetrafluoroethylene (hereinafter PTFE). The inner surface of the cover may be made of rubber type material to improve adherence to the inner wall of the air intake. Alternatively, the cover may be integrally made of PTFE.

Providing a boot on a leading edge tip and/or a trailing edge tip of the blade may comprise providing one single boot extending between, and mounted on, the leading edge tip and the trailing edge tip of the fan blade.

Alternatively, providing a boot on a leading edge tip and/or a trailing edge tip of the blade may comprise providing one single boot mounted on either the leading edge tip or the trailing edge tip of the fan blade.

Further alternatively, providing a boot on a leading edge tip and/or a trailing edge tip of the fan blade may comprise providing a first boot mounted on the leading edge tip of the fan blade and a second boot mounted on the trailing edge tip of the fan blade.

The method may comprise providing the boot on the leading edge tip and/or the trailing edge tip of the fan blade and the boot may be removably mounted to the leading edge tip and/or the trailing edge tip of the fan blade. Alternatively, the method may comprise providing the single boot extending between the leading edge tip and the trailing edge tip of the fan blade and the single boot may be removably mounted to the leading edge tip and the trailing edge tip of the fan blade. Further alternatively, the method may comprise providing the first boot and the second boot, and the first boot and the second boot may be removably mounted on the leading edge and the trailing edge of the fan blade, respectively.

The boot may be mounted with interference fit to the leading edge tip and/or the trailing edge tip of the fan blade. For example, the boot may be provided with an inner surface made of rubber type material to improve interference fit and adhesion to the fan blade.

The boot may be further provided with an outer surface made of PTFE. The outer surface of the boot is designed to contact the outer surface of the cover or the inner wall of the air intake.

The boot may be shaped to feature a footprint relatively larger than the fan blade tip width. The footprint of the boot may have a width corresponding to at least two, for example at least three, or four, or five, or six or seven, or eight times the fan blade tip width.

The method may comprise providing the cover on the inner wall of the air intake and may further comprise rotating the fan disc to align the fan blade with the cover.

The method may further comprise providing a groove, or track, in the cover to guide the boot during sliding.

The method may further comprise providing a groove in the cover and coupling the boot to the groove during sliding. In other words, the method may further comprise providing a groove in the cover and coupling the boot to the groove during removing or mounting.

The method may further comprise providing the boot with a boss, or pin, and coupling the boss with the groove during sliding. The boss may project from the boot. The groove and the boss may be shaped to match each other's shape. In other words, the groove and the boss may be shaped to be complementary in shape.

Once the fan blade has been installed/removed, the cover and the boot may be removed. In particular, once the fan blade has been installed/removed, the cover and the boot may be detached from the inner wall of the air intake and the leading edge tip and/or the trailing edge tip of the fan blade, respectively, and removed.

According to another aspect, there is provided a method of removing/mounting a fan blade from/to a fan disc of a ducted fan aeroengine comprising providing a cover on an inner wall of an air intake of the aeroengine, and/or a boot on a leading edge tip and/or trailing edge tip of the fan blade; and removing/mounting the fan blade from/to the fan disc by sliding the boot across the inner wall of the air intake, or sliding the fan blade across the cover, or sliding the boot across the cover.

According to yet another aspect, there is provided a tooling for removing/mounting a fan blade from/to a fan disc of a ducted fan aeroengine comprising a cover adapted to be arranged on an inner wall of an air intake of the aeroengine and/or a boot adapted to be mounted on a leading edge tip and/or a trailing edge tip of the fan blade, whereby the fan blade is prevented from contacting the inner wall of the air intake during removing/mounting.

A tooling for removing or mounting a fan blade from or to a fan disc of a ducted fan aeroengine may comprise a cover adapted to be arranged on an inner wall of an air intake of the aeroengine and a boot adapted to be mounted on a leading edge tip and/or a trailing edge tip of the fan blade, wherein during removing or mounting the boot is adapted to slide across the cover. During removing or mounting, the boot may be in contact, at least temporarily, with the cover. In other words, during removing/mounting, the cover and the boot prevent the fan blade from contacting the inner wall of the air intake.

A tooling for removing or mounting a fan blade from or to a fan disc of a ducted fan aeroengine may comprise a cover adapted to be arranged on an inner wall of an air intake of the aeroengine or a boot adapted to be mounted on a leading edge tip and/or a trailing edge tip of the fan blade, wherein during removing or mounting the fan blade is adapted to slide across the cover, or the boot is adapted to slide across the inner wall of the air intake. During removing or mounting, the fan blade may be in contact, at least temporarily, with the cover; or during removing or mounting, the boot may be in contact, at least temporarily, with the inner wall of the air intake. In other words, during removing/mounting, either the cover alone or the boot alone prevents the fan blade from contacting the inner wall of the air intake.

The tooling may comprise the cover and the cover may feature a low friction outer surface with a coefficient of static friction µ₃ of less than 0.2, for example less than 0.1, for example less than 0.08, for example less than 0.06, for example less than 0.04.

The tooling may comprise the boot and the boot may feature a low friction outer surface with a coefficient of static friction µ₃ of less than 0.2, for example less than 0.1, for example less than 0.08, for example less than 0.06, for example less than 0.04.

The tooling may comprise the cover and the boot, and the cover and the boot may feature respective low friction outer surfaces with a coefficient of static friction µ₃ of less than 0.2, for example less than 0.1, for example less than 0.08, for example less than 0.06, for example less than 0.04.

The cover may be removable. The cover may be shaped to be removably arranged on the inner wall of the air intake. The cover may be removably arranged on the inner wall of the air intake. The cover may be shaped to conform to a profile of the air intake.

The boot may be removable. The boot may be shaped to be removably mounted on the leading edge tip and/or the trailing edge tip of the fan blade. The boot may be removably mounted on the leading edge tip and/or the trailing edge tip of the fan blade.

At least one of the cover and boot may feature a low friction outer surface. The cover and/or the boot may feature an outer surface made of low friction material.

It will be understood that the term "low friction" refers to values of the coefficient of friction (COF) for surfaces at rest µ₃ less than 0.2, for example less than 0.1, for example less than 0.08, for example less than 0.06, for example less than 0.04.

The cover and the boot may define a system with a coefficient of kinetic friction µₖ of less than 0.2, for example less than 0.1, for example less than 0.08, for example less than 0.06, for example less than 0.04

The low friction outer surface of the cover may be made of PTFE.

The low friction outer surface of the boot may be made of PTFE.

The low friction outer surface of the cover and/or the boot may be made of metal such as steel, titanium or aluminium, or a combination of metallic and polymer materials.

The tooling may further comprise any one of bolted fixings, clamps, magnets, suction cups and frames to secure the cover to the inner wall of the air intake of the aeroengine.

The cover may comprise bolt holes adapted to receive a bolt. The bolt holes may be positioned away from a slide path of the fan blade. For example, two or more bolts, for example four bolts, may be provided in the cover to receive respective two or more, for example four, bolts.

The cover may comprise magnets, for example embedded in the cover itself or positioned on an inner surface of the cover, adapted to be coupled to the inner wall of the air intake.

Alternatively, or in addition, the cover may comprise suction cups, for example provided on the inner surface of the cover, adapted to couple with the inner wall of the air intake.

The tooling may comprise a frame, for example an A-frame, locked to the fan disc and holding the cover in place at a defined rotational angle of the fan.

The boot may cover the leading edge tip of the fan blade only. Alternatively, the boot may cover the trailing edge tip of the fan blade only. Further alternatively, the boot may extend to cover the fan blade tip completely. In other words, the boot may extend to cover both the leading edge tip and the trailing edge tip of the fan blade.

The boot may comprise a slot to accommodate the leading edge tip and/or the trailing edge tip of the fan blade.

The boot may have an inner surface opposite the outer surface. The boot may have the inner face made of rubber type material. The boot may be made in one single piece. Alternatively, the boot may be made in more than one piece, for example in two pieces provided with couplings to mutually couple.

The tooling may comprise the cover and the boot. The cover may comprise a groove, or track. The groove may be rectilinear, or curved. The boot may comprise a boss, or pin. The groove and the boss may be shaped to match each other. The groove and the boss may be shaped such that the boss can slide within the groove. For example, the boss may be hemispherical, cylindrical, T-shaped, dovetail-shaped and the groove may feature a shape conjugated to the shape of the boss.

The cover may feature a shape corresponding to a profile of the air intake onto which it is to be arranged.

The cover may be adapted to take a profile of the air intake.

According to another aspect, there is provided a tooling for removing or mounting a fan blade from or to a fan disc of a ducted fan aeroengine comprising a cover adapted to be arranged on an inner wall of an air intake of the aeroengine and/or a boot adapted to be mounted on a leading edge tip and/or a trailing edge tip of the fan blade, wherein during removing or mounting the boot is adapted to slide across the inner wall of the air intake or the cover, or the fan blade is adapted to slide across the cover.

According to yet another aspect, there is provided an assembly comprising a ducted fan aeroengine comprising an air intake with an inner wall and a fan with a plurality of fan blades, and a tooling according to any one of the previous aspects comprising at least one between the cover and the boot, wherein the cover, if comprised, is arranged on the inner wall of the air intake and the boot, if comprised, is mounted on the leading edge tip of one of the plurality of fan blades.

in an embodiment, the tooling may comprise the cover and the boot, wherein the cover is arranged on the inner wall of the air intake and the boot is mounted on the leading edge tip of one of the plurality of fan blades.

The ducted fan aeroengine may comprise a fan intake liner arranged in the air intake. The cover may be arranged on the inner wall of the air intake to cover, at least partially, the fan intake liner.

The assembly may comprise the cover and the cover may be shaped to conform to a profile, or aerolines, of the air intake.

The ducted fan aeroengine may be a gas turbine engine for an aircraft comprising an engine core comprising a turbine, a compressor, and a core shaft connecting the turbine to the compressor; wherein the fan is located upstream of the engine core; the gas turbine engine further comprising a gearbox that receives an input from the core shaft and outputs drive to the fan so as to drive the fan at a lower rotational speed than the core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a sectional side view of a portion of a fan of a ducted fan aeroengine with a fan blade arranged in a bottom dead position and a tooling according to an embodiment mounted thereon;
Figures 5 - 7 are sectional side views of the fan blade of figure 4 during successive phases of removal;
Figure 8 is an axial partial view of a blade mounted on a respective blade disc; and
Figure 9 is a sectional side view of an embodiment of a tooling according to a further embodiment.

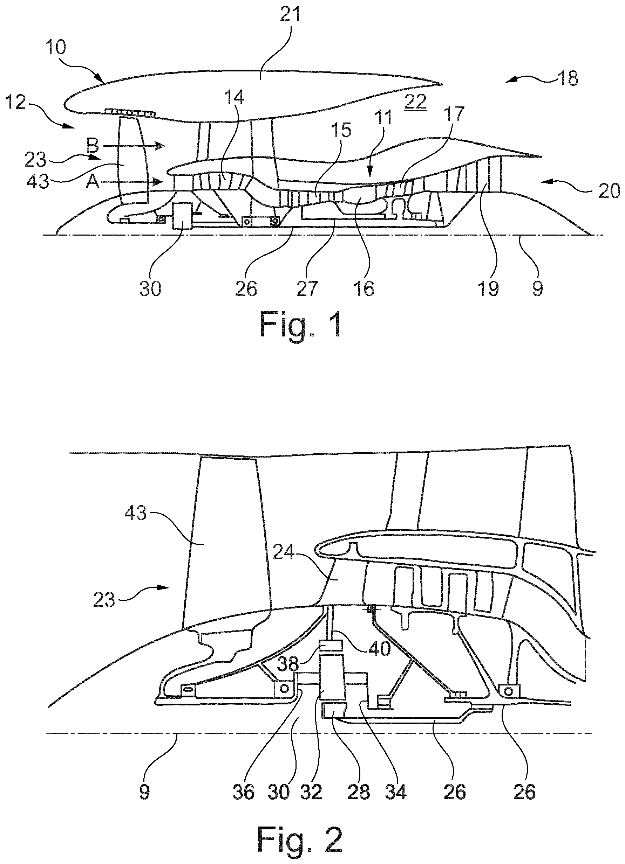

Figure 1 illustrates a ducted fan aeroengine, in particular a gas turbine engine 10 having a principal rotational axis 9. The engine 10 comprises an air intake 12 and a propulsive fan 23 with a plurality of fan blades 43 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

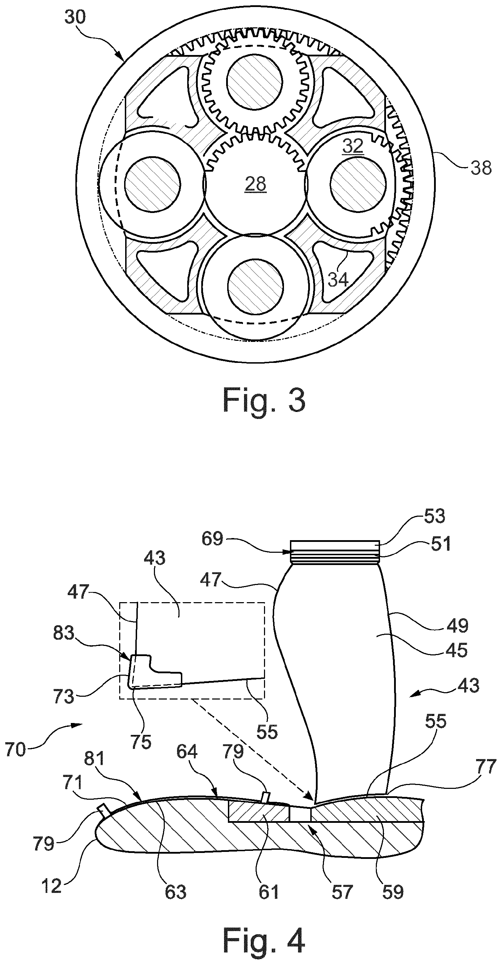

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Figure 4 illustrates a fan blade 43 of the fan 23 at the bottom dead centre position. The blade 43 comprises an aerofoil portion 45 having a leading edge 47, a trailing edge 49, a pressure surface wall extending from the leading edge 47 to the trailing edge 49 and a suction surface wall extending from the leading edge 47 to the trailing edge 49. The blade 43 comprises a root 51 via which the blade 43 is connected to a fan disc 53 and, at an opposing end to the root 51, a tip 55.

The fan 23 rotates within a fan casing 57 comprising a fan track liner 59 and, upstream thereof, a fan intake liner 61. The air intake 12 features an inner wall 63 which defines a profile, or aerolines, 64 of the air intake 12.

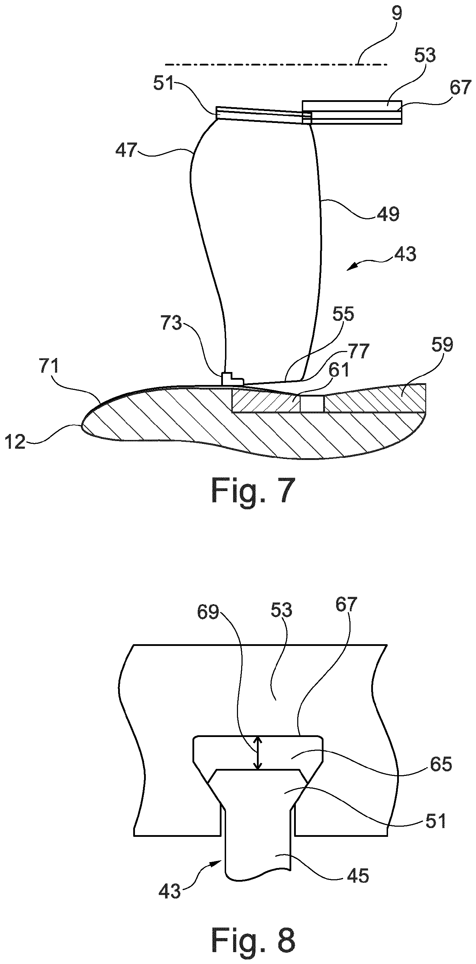

Figure 8 illustrates an axial view of the blade 43 mounted on the fan disc 53. In particular, the root 51 of the blade 43 is mounted in a seat 65 of the fan disc 53. A gap 69 is defined between the root 51 of the blade 43 and a base 67 of the disc seat 65, which in operation is filled with a slider (not illustrated). The gap 69 may be used for manipulation of the blade 43, allowing it to be tilted fore and aft to clear the rising intake aerolines 64, as will be illustrated in more details hereinafter.

Figure 4 further illustrates a tooling 70 comprising a cover 71 and a boot 73. It will be understood that, depending on the air intake and fan blade geometry, the tooling 70 may comprise the cover 71 only, or the boot 73 only.

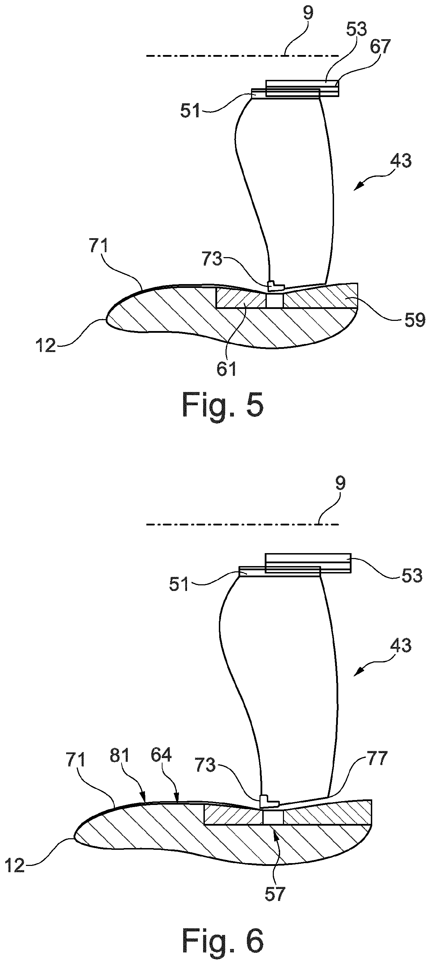

The cover 71 is arranged on the air intake 12, in particular on the inner wall 63 of the air intake 12. The cover 71 may cover at least partially the fan intake liner 61. The cover 71 has an inner surface that precisely follows the aerolines 64 of the air intake 12. Couplings 79 may be provided to fix the cover 71 to the air intake 12 and/or the fan intake liner 61. The couplings 79 may be bolts passing through corresponding through holes achieved in the cover 71 and screwed in threaded holes achieved in the air intake 12 and/or the fan intake liner 61. Alternatively, the couplings 79 may be clamps, magnets or suction cups facing the inner wall. For sake of simplicity, the couplings 79 are not illustrated in figures 5-7. Alternatively, the couplings 79 may be omitted and the cover 71 may adhere to the inner wall 63 of the air intake 12 by friction, for example the cover 71 may have an inner surface facing the inner wall 63 of the air intake 12 made of rubber.

In the illustrated embodiment, the boot 73 is mounted on the leading edge 47 of the blade 43, covering and protecting a leading edge tip 75 of the blade 43 during mounting and dismounting/removal. The boot 73 covers at least partially the tip 55 of the blade 43. In other words, the boot 73 is relatively short and covers the leading edge tip 75 only. In embodiments not illustrated, a boot may be mounted to protect a trailing edge tip 77 of the blade 43 instead. In other embodiment not illustrated, the boot may be relatively long and may extend to cover the tip 55 completely, i.e. both the leading edge tip 75 and the trailing edge tip 77. In further embodiments not illustrated, the tooling 70 may comprise the cover 71 and a first and a second boot, the first boot covering the leading edge tip 75 and the second boot covering the trailing edge tip 75.

For example, for dismounting, the leading edge tip 75 only, or both the leading edge tip 75 and the trailing edge tip 77 may be protected by respective boot(s).

For mounting, the trailing edge tip 77 only, or both the trailing edge tip 77 and the leading edge tip 75 may be protected by respective boot(s). During removal the boot 73 may contact the cover 71 and slide thereon. The cover 71 and the boot 73 feature respective outer surfaces 81, 83. The outer surface 81 of the cover 71 and/or the outer surface 83 of the boot 73 may be made of low friction material, for example PTFE.

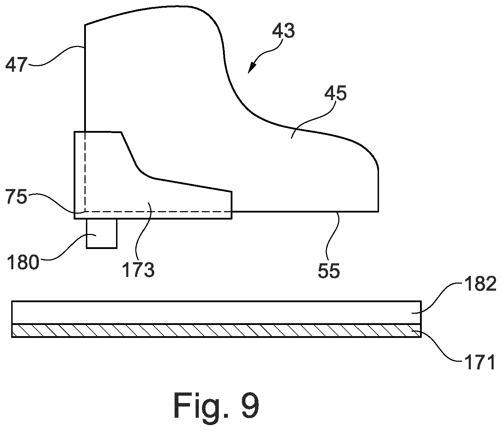

In figure 9, there is illustrated a further embodiment of the tooling 70 comprising a cover 171 and a boot 173. A difference between the figure 9 embodiment and the embodiment of figures 4-7 is that the boot 173 has a boss, or pin, 180 and the cover 171 has a groove, or track, 182. In an embodiment not illustrated, the boss 180 may be omitted and the boot 173 may directly engage with the groove 182 and slide thereon. In a further embodiment, the boot (73, 173) may be omitted and the blade 43 may contact and slide on the cover (71, 171); in particular, if the groove 182 is present, the leading edge tip 75 may slide in the groove 182.

The groove 182 generally extends axially along the aerolines. The groove 182 has been illustrated as straight, but may feature any other suitable shape. The boss 180 is adapted to engage with the groove 182. The boss 180 and the groove 182 are shaped to be mutually complementary, or conjugated. For example, in the illustrated embodiment, the boss 180 is cylindrical.

In operation, i.e. during mounting and dismounting/removal, the cover 171 is mounted on the air intake 12 and the fan blade 43 is rotated so that the boss 180 is aligned with the groove 182. The groove 182 is provided in the cover 171 such that, with the blade 43 positioned at the bottom dead centre position and the cover 171 properly mounted on the air intake 12, the boss 182 is aligned with the groove 182.

The groove 182 and/or the boss 180 may be made of a low friction material, for example PTFE, or may feature outer surfaces made of a low friction material, for example PTFE.

Figures 5 to 7 illustrate successive phases of the removal of the blade 43 from the fan disc 53. As illustrated in the figures, both the cover 71 and the boot 73 are mounted on the inner wall 63 of the air intake 12 and the leading edge tip 75. In not illustrated embodiments, either the cover 71 or the boot 73 may be omitted, but still the blade 43, in particular the leading edge tip 75, is prevented from directly contacting and damaging, and/or getting damaged by, the inner wall 63 of the air intake 12.

Because of a gap between the tip 55 and the fan track liner 59 and the fan intake liner 61, the blade 43 can be initially moved forward (form right to left in the figures), out of the fan disc 53 (fig. 5). Subsequently, as the gap between the tip 55 and the fan intake liner 61 is limited, the boot 73 contacts the cover 71 (fig. 6), which guides the blades 43 radially. If provided with the groove 182, the cover may guide the blade 43 axially as well.

While advancing forward, the blade 43 may be tilted (fig. 7), for example fore or aft, as and if necessary to follow the cover 71, thanks to the gap 69 between the root 51 and the disc seat base 67, which provides an additional degree of freedom to the blade 43.

For mounting of the fan blade, the phases above described may be simply reversed. For mounting, the boot 73 may be replaced by, or supplemented with, an analogous boot mounted on the trailing edge tip, or the boot 73 may be replaced by a boot covering both the leading edge tip and the trailing edge tip.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A method of removing/mounting a fan blade from/to a fan disc of a ducted fan aeroengine comprising:
- providing a cover on an inner wall of an air intake of the aeroengine; and/or a boot on a leading edge tip and/or a trailing edge tip of the fan blade; and
- removing/mounting the fan blade from/to the fan disc by sliding the fan blade across the inner wall of the air intake of the aeroengine, wherein said cover and/or boot prevent the fan blade from contacting the inner wall of the air intake during removing/mounting.

2. The method according to claim 1, comprising providing the cover on the inner wall of the air intake of the aeroengine and wherein the cover is removably mounted to the inner wall of the air intake of the aeroengine.

3. The method according to the preceding claim, wherein the cover is removably mounted to the inner wall of the air intake of the aeroengine by fixing the cover to the air intake with any one of bolts, clamps, magnets, suction cups or frames.

4. The method according to any one of the preceding claims, comprising providing the boot on the leading edge tip and/or the trailing edge tip of the fan blade and wherein the boot is removably mounted to the leading edge tip and/or the trailing edge tip of the fan blade.

5. The method according to the preceding claim, wherein the boot is mounted with interference fit to the leading edge tip and/or the trailing edge tip of the fan blade.

6. The method according to any one of the preceding claims, comprising providing the cover on the inner wall of the air intake of the aeroengine, and providing the cover with a groove to axially guide the fan blade during removing/mounting.

7. The method according to the preceding claim, comprising providing the boot on the leading edge tip and/or the trailing edge tip of the fan blade, providing the boot with a boss, and coupling said boss with the groove during removing/mounting.

8. The method according to any one of the preceding claims, comprising providing the cover on the inner wall of the air intake and further comprising rotating the fan disc to align the fan blade with the cover.

9. A tooling for removing/mounting a fan blade from/to a fan disc of a ducted fan aeroengine comprising:
- a cover adapted to be arranged on an inner wall of an air intake of the aeroengine; and/or a boot adapted to be mounted on a leading edge tip and/or a trailing edge tip of the fan blade, whereby the fan blade is prevented from contacting the inner wall of the air intake during removing/mounting.

10. The tooling according to the preceding claim, comprising the cover and wherein the cover features a low friction outer surface with a coefficient of static friction µₛ of less than 0.2, for example less than 0.1, for example less than 0.08, for example less than 0.06, for example less than 0.04; and optionally wherein the low friction outer surface of the cover is made of PTFE; and optionally further comprising any one of bolted fixings, clamps, magnets, suction cups and frames to secure the cover to the inner wall of the air intake of the ducted fan aeroengine.

11. The tooling according to any one of claims 9 and 10, comprising the boot and wherein the boot features a low friction outer surface with a coefficient of static friction µₛ of less than 0.2, for example less than 0.1, for example less than 0.08, for example less than 0.06, for example less than 0.04; and optionally wherein the low friction outer surface of the boot is made of PTFE; and optionally wherein the boot has an inner surface made of rubber type material.

12. The tooling according to any one of claims 9 to 11, comprising the cover and the boot, wherein the cover comprises a groove and the boot comprises a boss adapted to slide in said groove.

13. An assembly comprising:
- a ducted fan aeroengine comprising an air intake with an inner wall and a fan with a plurality of fan blades; and
- a tooling according to any one of claims 9 to 12 comprising at least one between the cover and the boot, wherein the cover, if comprised, is arranged on the inner wall of the air intake and the boot, if comprised, is mounted on the leading edge tip and/or trailing edge tip of one of said plurality of fan blades.

14. The assembly according to the preceding claim, comprising the cover and wherein the ducted fan aeroengine comprises a fan air intake liner arranged in the air intake, the cover being arranged on the inner wall of the air intake to cover, at least partially, said fan air intake liner.

15. The assembly according to any one of claims 13 and 14, comprising the cover and wherein the cover is shaped to conform to a profile of the air intake.
